# EUROPEAN PATENT APPLICATION

(11) **EP 2 696 552 A1**
(43) Date of publication of application: **12.02.2014**
(21) Application number: 12179522.3
(22) Date of filing: 07.08.2012
(51) Int. Cl.: H04L 29/06, H04N 21/24, H04N 21/2343

(54) **METHOD, SYSTEM AND NETWORK FOR TRANSMITTING MULTIMEDIA DATA TO A PLURALITY OF CLIENTS**

(71) Applicant: NTT DoCoMo, Inc., Chiyoda-ku Tokyo 100-6150 (JP)
(72) Inventor: Shehada, Mohammed, 80687 München (DE); Staehle, Dirk, 80687 München (DE); Kellerer, Wolfgang, 80687 München (DE); Steinbach, Eckehard, 80687 München (DE); El Essaili, Ali, 80687 München (DE); Schroeder, Damien, 80687 München (DE)
(74) Representative: Zimmermann, Tankred Klaus

(57) **Abstract**

For transmitting multimedia data to a plurality of clients (104a, 104b) over a network (102), wherein the multimedia data is stored in a plurality of formats of different multimedia rates, on the basis of utility information for the multimedia data, the utility information describing a relationship between multimedia quality and multimedia rate, and on the basis of a condition of the network (102), for each of the plurality of clients (104a, 104b) available multimedia rates for the multimedia data are determined. In response to a client request (114) for transmitting the multimedia data with a desired multimedia rate, in accordance with the available multimedia rates determined for the requesting client (104a, 104b), a format of the requested multimedia data is selected and the multimedia data is transmitted in the selected format to the requesting client (104a, 104b).

## Description

The present invention relates to the field of providing multimedia data to a plurality of clients over a network, more specifically to a method, a system and a network for transmitting multimedia data to a plurality of clients. Embodiments of the invention relate to approaches for providing video data over a wireless or a wired network to a plurality of clients from a server providing the video data.

There is an ever increasing requirement for reliable and efficient rich multimedia content delivery in wired or wireless networks from a server holding the multimedia content to a plurality of client devices. For example, in a wireless network the enhanced capabilities of mobile devices and the improved capabilities of wireless networks have led to a massive growth in mobile video consumption. Recently, Dynamic Adaptive Streaming over HTTP (DASH - also referred to as MPEG-DASH or 3GP-DASH (see reference [1])) has been standardized for mobile multimedia streaming. This approach re-uses the networking infrastructure of widely deployed HTTP (Hypertext Transfer Protocol) over TCP (Transmission Control Protocol) (progressive download) and provides an entire streaming framework including media representation, transport and dynamic bitrate adaptation, which is compatible with the standard HTTP protocol.

For optimal media delivery the transport of the content from the server to the client device over the network remains the main bottleneck. For example for an optimal mobile media delivery, the wireless link remains the bottleneck as is described in reference [2]. In case of wireless networks, mobile operators face the problem of allocating the scarce network resources among multiple clients while maximizing the user quality of experience (QoE). In wired networks the network traffic may be a problem for optimal media delivery.

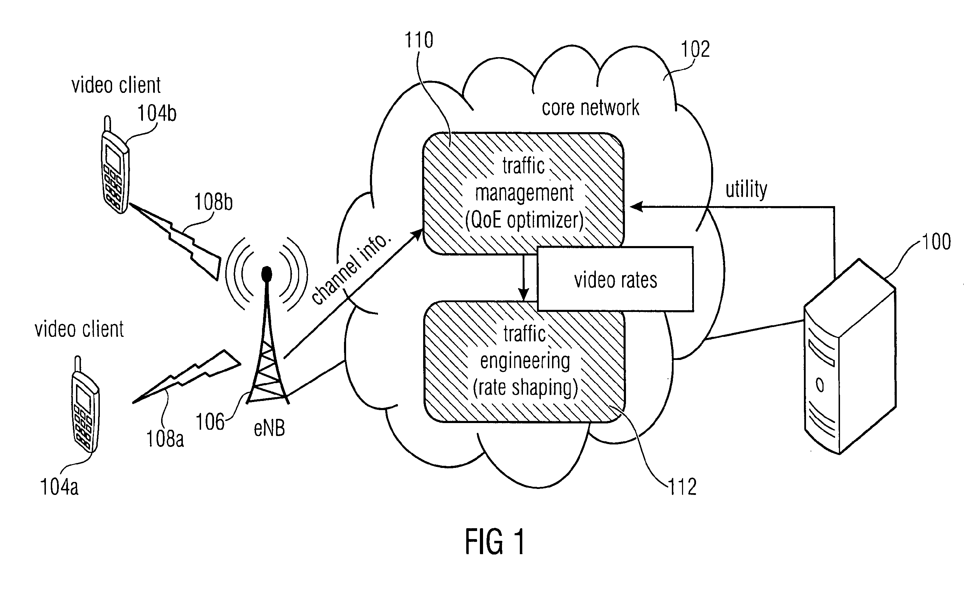

Fig. 1 is a schematic representation of an environment for providing video data from a video server 100 via a core network 102 of, for example the core network of a mobile network to video clients 104a and 104b. As is shown in Fig. 1, each video client connects to a base station (eNB) 106 via a respective wireless channel 108a and 108b. The base station 106, like the video server 100 are connected to the core network 102. Within the core network 102 a traffic management unit 110 and a traffic engineering unit 112 is provided, wherein the traffic management unit 110 includes, for example, a QoE optimizer.

The traffic management unit 110 receives, from the base station 106, information on the long-term average quality of the two wireless channels 108a and 108b between the base station 106 and the video clients 104a and 104b, respectively. Further, the traffic management unit 110 receives from the video server utility information for the multimedia content. The information may include rate-distortion information for different representations of the video formats stored in the server 100.

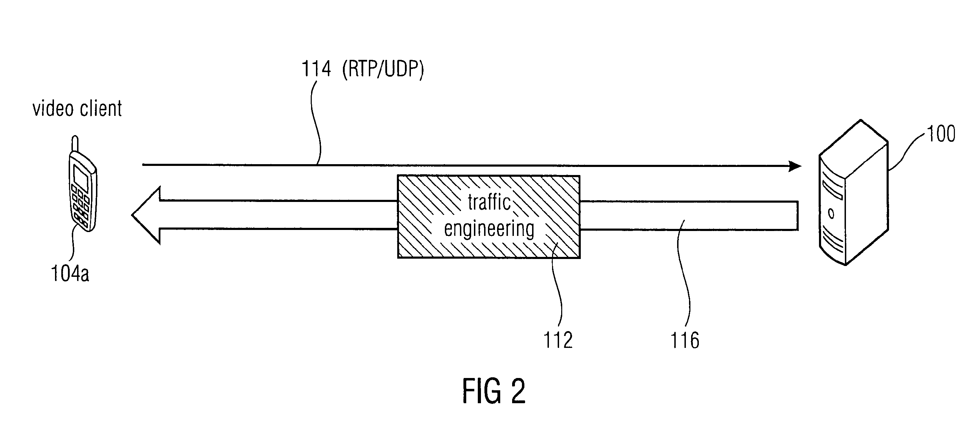

For providing video contents from the video server 100 (see Fig. 1) to a client over the core network 102 one known approach is the so called RTP/UDP-streaming approach (RTP = Real-Time Transport Protocol, UDP = User Datagram Protocol). Fig. 2 shows a schematic representation of this streaming approach between the server 100 and the client 104a. The client issues a request 114 to the video server 100 for a specific video stream, and the video server provides a packet stream with the video bitrate over the UDP, as is depicted at 116. The data from the video server 100 is transmitted via the core network 102 and through the traffic engineering unit 112 which provides for a rate shaping mechanism upon transferring the data from the video server to the client, for example by applying appropriate transcoding algorithms or by content-aware packet dropping. QoE-based resource allocation over wireless networks has been proposed for traditional RTP/RTSP streaming, as is described in reference [3]. This approach, however, is costly and goes together with an overhead due to the necessary in-network content adaption by, for example, transcoding or content-aware packet dropping.

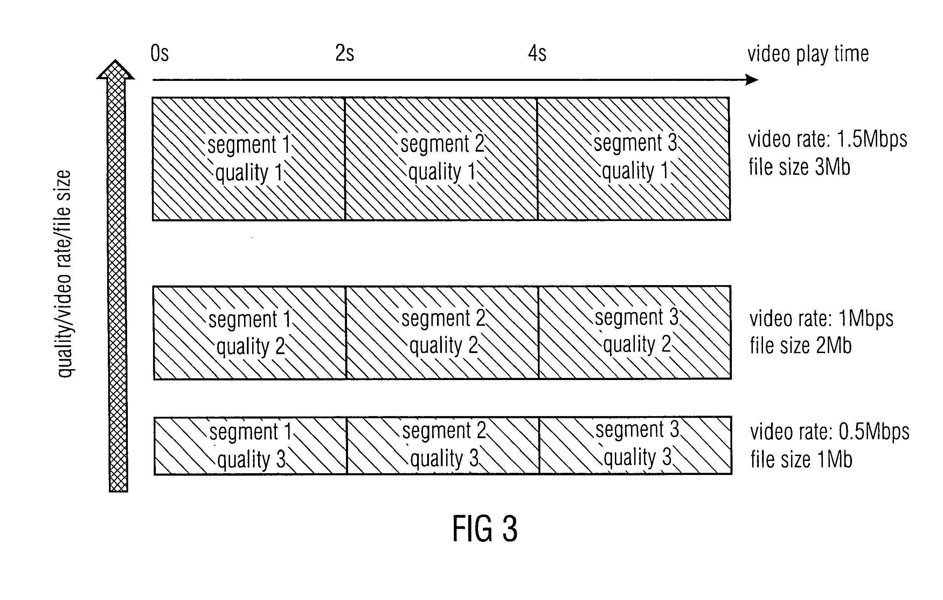

Therefore, another known approach in the art is the so called "adaptive HTTP streaming" using for example the DASH protocol (DASH = Dynamic Adaptive Streaming of HTTP), which provides inherent adaptivity by encoding the same content at multiple bitrates. Fig. 3 shows an example for providing video content in accordance with a DASH video format. Fig. 3 is an example of the DASH video format as stored, for example, in the server 100 of Fig. 1. In accordance with this format, many small files are stored on the server, each containing a certain period of video in a certain quality. More specifically, in Fig. 3 the video content is stored in three different qualities, namely quality 1, quality 2 and quality 3. For each quality, three segments are shown, each having a length of for example 2 seconds. The video rate for the highest quality segments is 1.5 Mbps and the file size is 3 Mb. For the lowest quality, the video rate is 0.5 Mbps with a file size of 1 Mb and the intermediate quality (quality 2) has a video rate of 1 Mbps at a file size of 2 Mb.

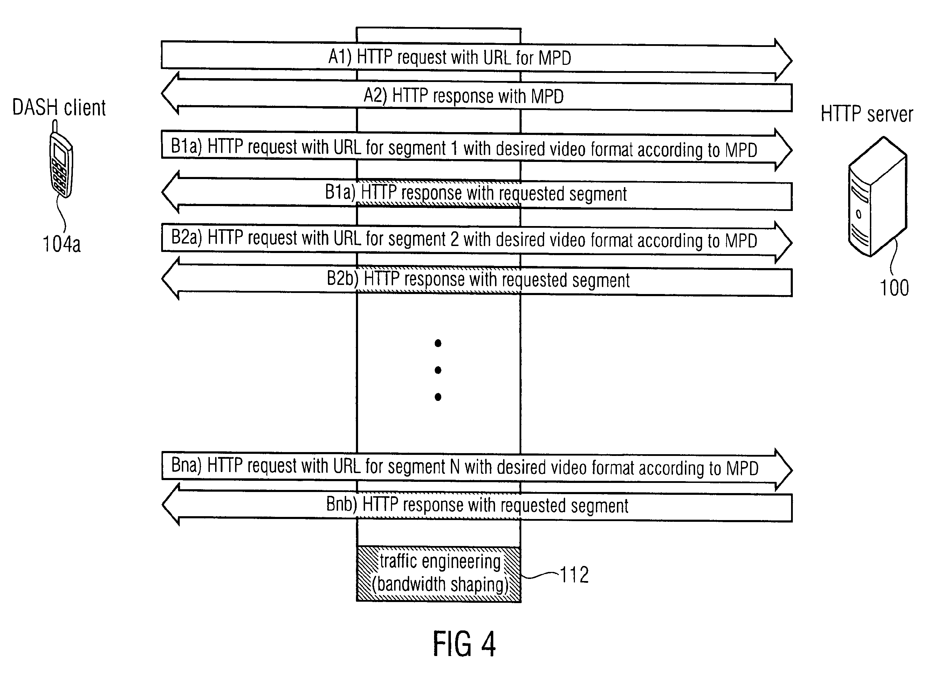

Fig. 4 shows an example of the streaming technology making use of the DASH protocol. Again, the server 100 and the client 104a are shown, and the server holds the multimedia contents or video contents in accordance with the format shown in Fig. 3. At the beginning of the multimedia streaming process the DASH client 104a requests the media presentation description (MPD) of the desired multimedia stream from the server by sending A1 an HTTP request to the server 100 containing the URL of the MPD. The server 100 returns A2 an HTTP response including the MPD. The MPD contains a description of the multimedia formats available at the server 100 including the URLs for the different segments and multimedia formats. For downloading a segment in the desired multimedia format, the DASH client 104a issues B1a-BNa HTTP requests to the server 100, wherein an HTTP request includes the URL of the multimedia segment stored on the server 100 in the desired quality. The server 100 transfers B1b- BNb the requested video segment tile to the client. The request is transmitted as an HTTP request and the segment is transported as a HTTP response. HTTP runs on top of TCP as is indicated at 116. Optionally, like in the RTP/UDP-streaming approach, also in the DASH session traffic engineering 112 may be carried out for providing a rate shaping mechanism upon transferring the data from the server to the client.

The above approach described with regard to Figs. 3 and 4 is disadvantageous as it shows an inconsistent and unfair behavior when two or more clients are competing for resources on a shared link, as is outlined in reference [4]. Indeed, it is concluded in reference [5] that the TCP bandwidth should be twice the multimedia rate to ensure a good streaming performance. As this over-provisioning may not be possible, for example in a limited wireless spectrum, resource management strategies that adapt to the individual user conditions and media characteristics also need to be considered.

The DASH protocol defines the presentation and segment formats for adaptive HTTP streaming (see Fig. 3) but the control strategies are not part of the standard. Different rate adaptation approaches have been proposed to enhance the user perception in adaptive HTTP video delivery, as is for example described in references [6] and [7]. However, these approaches tend to optimize the adaptive HTTP streaming of a single user without further considering the influence on other DASH users sharing the network resources. In fact, the multi-access DASH streaming problem has been explored very little so far. Adaptive HTTP media delivery has been mainly studied from an end-to-end server-client perspective while the network, for example the mobile network, has been treated as a black-box (see references [2] and [8]). Among the few publications on multi-user HTTP streaming, reference [9] considers a fair scheduler (RR) for adapting the HTTP/TCP video transmission at the last-hop wireless link. In reference [10], network management for adaptive HTTP video delivery across multiple clients is considered. However, the target bitrate is determined by the network based on available bandwidth estimates of all users (see e.g. Fig. 4). Reference [11] shows that a simple bandwidth shaping policy in a residential gateway can improve the adaptive HTTP experience among competing clients.

It is an object underlying the present invention to provide an improved approach for transmitting multimedia content to a plurality of clients over a network.

This object is achieved by method of claim 1, a system of claim 20 and a network of claim 21.

Embodiments of the invention provide a method for transmitting multimedia data to a plurality of clients over a network, wherein the multimedia data is stored in a plurality of formats of different multimedia rates, the method comprising:
on the basis of utility information for the multimedia data, the utility information describing a relationship between multimedia quality and multimedia rate, and on the basis of a condition of the network, determining for each of the plurality of clients available multimedia rates for the multimedia data; and
in response to a client request for transmitting the multimedia data with a desired multimedia rate, selecting, in accordance with the available multimedia rates determined for the requesting client, a format of the requested multimedia data and transmitting the multimedia data in the selected format to the requesting client.

In accordance with embodiments the method further comprises determining from the request the desired multimedia rate, and wherein the step of selecting and transmitting comprises selecting from the plurality of different multimedia rates, in which the requested multimedia data is stored, the one that matches one of the available multimedia rates best.

In accordance with embodiments an optimizer and a proxy server may be provided, wherein
the optimizer receives the utility information and the information about the network condition, determines the available multimedia rates, and provides the available multimedia rates to the proxy server, and the proxy server learns about the available formats by parsing the initial exchange of available formats between a source storing the multimedia data and the client, and during the streaming process the proxy server receives the request, selects the format, parses the request, modifies the request based on the selected format, and transmits the modified request to the source storing the multimedia data, or
wherein the optimizer receives the list of available formats from the proxy, the utility information and the information about the network condition, determines the available multimedia rates, selects the format, and provides the selected format to the proxy server, the proxy server learns about the available format by parsing the initial exchange of available formats between the source storing the multimedia data and the client and forwards this list of formats to the optimizer, and during the streaming process and the proxy server receives the request parses the request, modifies the request based on the received selected format, and transmits the modified request to the source storing the multimedia data.

Modifying the request may comprise rewriting the request on the basis of the selected one of the available multimedia rates. The request for transmitting the multimedia data may comprise a locator, e.g. a URL, the locator being associated with the multimedia data encoded at the desired multimedia rate, and in this case modifying the request may comprise changing the locator to match a locator associated with a file holding the multimedia data encoded at one of the available multimedia rates. The proxy server may be provided on the network or on some or all of the clients, wherein, in case the proxy server is provided on the one or more clients, the available multimedia rates are signaled to the proxy server on the client.

In accordance with further embodiments the request and the available multimedia rates are transmitted to a source of the multimedia data, and wherein the source selects the format of the multimedia data in accordance with one of the received available multimedia rates and transmits the requested multimedia data in the selected format.

In accordance with further embodiments the method further comprises allocating, on the basis of the selected multimedia rates, a bandwidth for transmitting the requested multimedia data over the network to the requesting client.

In accordance with further embodiments the available multimedia rates are determined repeatedly during a transmitting session so as to take into account changes in the condition of the network.

In accordance with further embodiments the multimedia data comprise a plurality of segments, each segment containing a certain period of the media data, and wherein the request identifies the segment to be transmitted to the client.

In accordance with further embodiments the network is a wired network or a wireless network, and wherein the network condition comprises a congestion status of the network or radio conditions in the network.

In accordance with further embodiments the multimedia data is provided in accordance with the DASH protocol and transmitted to the clients in accordance with HTTP.

In accordance with further embodiments the multimedia data comprises video data.

In accordance with further embodiments the utility information comprises rate-distortion information for the respective multimedia formats.

In accordance with further embodiments during a transmitting session, a client selects different desired multimedia rates according to predefined criteria. The predefined criteria may comprise available resources at the client and a buffer status at the client.

In accordance with further embodiments a client recognizes a change in the request and takes the change into account when determining a desired multimedia rate for a future request.

Embodiments of the invention provide a non-transitory computer program product comprising instructions stored on a machine-readable medium for performing the method in accordance with embodiments of the invention, when the instructions are executed on a computer.

Embodiments of the invention provide a system for transmitting multimedia data to a plurality of clients over a network, wherein the multimedia data is stored in a plurality of formats of different multimedia rates, the system being configured to operate in accordance with embodiments of the invention.

Embodiments of the invention provide a network for transmitting multimedia data to a plurality of clients, wherein the multimedia data is stored in a plurality of formats of different multimedia rates, the network comprising:
an optimizer configured to determine for each of the plurality of clients available multimedia rates for the multimedia data, on the basis of utility information for the multimedia data, the utility information describing a relationship between multimedia quality and multimedia rate, and on the basis of a condition of the network; and
a proxy server configured to receive a client request for transmitting the multimedia data with a desired multimedia rate and the available multimedia rates from the optimizer, to select from the plurality of different multimedia rates, in which the requested multimedia data is stored, the one that matches one of the available multimedia rates best, to modify the request based on the selected one of the available multimedia rates, and to transmit the modified request to a server storing the multimedia data for causing the server to transmit the multimedia data in the selected format to the requesting client.

The inventors of the present application studied the above mentioned prior art approaches in detail, and it was found out that all of these prior art approaches consider a plurality of parameters, however, none of the prior art approaches exploits the media content information. On the basis of this finding, embodiments of the invention provide for a new mechanism for improving user satisfaction using, in accordance with embodiments, dynamic adaptive streaming of HTTP (DASH) in wireless or wired networks. In accordance with embodiments a DASH proxy server is used for enhancing the quality of experience of DASH clients, and other than in conventional DASH approaches, whose rate adaption logics are either implemented locally in the DASH client or in the DASH server, embodiments of the present invention provide the DASH proxy server that is in charge of intercepting and rewriting client requests based on an input of a QoE optimizer.

Thus, embodiments of the invention provide a QoE-driven resource allocation for DASH that optimizes the adaptive HTTP media delivery to multiple clients in a wireless or a wired network. The network enforces the application layer rate adaption to the optimized resources by rewriting client requests in the DASH proxy server so that embodiments of the invention consider the benefit of adapting the network resources to the user perceived quality and adaptive HTTP streaming by rewriting the client requests.

Embodiments of the invention are advantageous as they improve the user-perceived quality in the network, increases the efficiency of radio resource utilization in wireless networks, improves user satisfaction, avoids customer complaints and is compatible with existing QoE media delivery framework.

Embodiments of the invention will be described with regard to the accompanying drawings, in which:
- Fig. 1: is a schematic representation of an environment for providing video data from a video server via a core network to video clients;
- Fig. 2: shows a schematic representation of a RTP/UDP-streaming approach between a server and a client;
- Fig. 3: shows an example of the DASH video format as stored, for example, in the server of Fig. 1;
- Fig. 4: shows an example of the streaming technology making use of the DASH protocol;
- Fig. 5: is a schematic representation of an embodiment of the invention for providing or transmitting multimedia contents from a server to a DASH client;
- Fig. 6: shows a schematic representation describing further embodiments of the invention in the context of a wireless mobile network;
- Fig. 7: shows schematic representations describing the approaches mentioned with regard to Fig. 6 in further detail, wherein Fig. 7(a) is a block diagram of the proactive proxy approach in accordance with an embodiment, Fig. 7(b) is a block diagram of the proactive proxy approach in accordance with another embodiment, and Fig. 7(c) is a block diagram of the proactive server approach in accordance with an embodiment;
- Fig. 8: shows a table summarizing the simulation parameters;
- Fig. 9: is a graph of the mean opinion score (MOS) of the different approaches averaged over 35 simulation runs;
- Fig. 10: shows the individual performance of four schemes averaged over 35 simulations; and
- Fig. 11: shows embodiments for providing the utility information to the QoE optimizer, wherein Fig. 11 (a) shows an embodiment in accordance with which the utility information is obtained from a data base, Fig. 11(b) shows an embodiment in accordance with which the utility information is contained in the MPD, and Fig. 11(c) shows an embodiment in accordance with which the utility information is obtained from the server.

In accordance with embodiments, a QoE driven multi-access DASH is provided that optimizes the adaptive HTTP media delivery to multiple clients in a wired or wireless network. The adaptive HTTP streaming functionality is, by definition, semi-decentralized, i.e. (a) the client is responsible for estimating the streaming data rate and makes segment decisions, and (b) the QoE optimizer makes the overall resource allocation.

Embodiments of the present invention describe an approach that considers the benefit of adapting the network resources to the user perceived quality in adaptive HTTP streaming by rewriting client requests. Different from rate adaptation schemes for single DASH streams which adjust to throughput variations, the QoE-driven multi-user rate adaption approach according to embodiments of the invention directly considers the impact on the user quality of experience given that the stream contents exhibit different rate-distortion characteristics. Embodiments of the invention allow to optimize the usage of the limited network resources by taking the user perceived quality into account. Further, drastic changes of service quality due to a dynamic change of a wireless channel condition can be prevented.

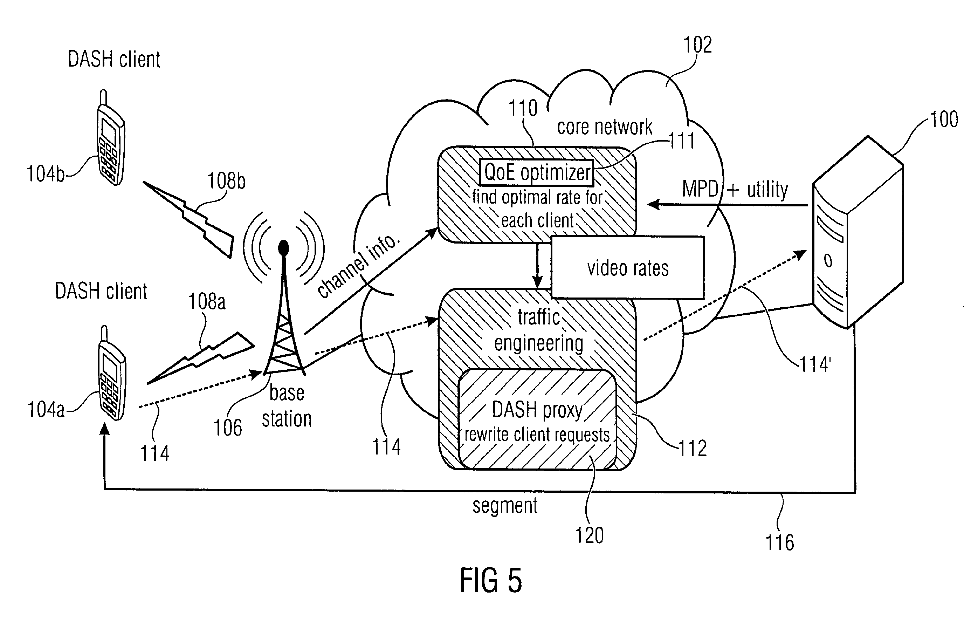

Fig. 5 shows a schematic representation of an embodiment of the invention for providing or transmitting multimedia contents from a server 100 to a DASH client 104. The client 104 is connected to the base station 106 via the wireless channel 108, and the base station 106 and the DASH server 100 are connected via the core network 102. The traffic management unit 110, in accordance with embodiments of the invention, comprises a QoE optimizer 111 that is provided to find an optimal multimedia rate for each client. This information is forwarded to the traffic engineering unit 112 which includes a DASH proxy server 120 that is provided to rewrite client requests and to send requested MPDs to the QoE optimizer 110. The traffic engineering unit 112 further includes a rate shaper that is provided to limit the bandwidth with which the multimedia data is transmitted from the server to the client. The QoE optimizer 111 receives from the base station information about the channel 108 between the base station 106 and the DASH client, from the proxy server 120 it receives the MPD, and from the DASH server 100 it receives the utility information, for example rate-distortion information for the different representations or formats stored in the DASH server 100. The channel information provided to the traffic management unit 110 describes a condition of the network, and the utility information describes the relationship between the multimedia quality, for example the video quality, and the multimedia rate, for example the video-rate, as it is stored in the server 100 (see also Fig. 3), e.g. the rate-distortion. On the basis of this information, the QoE optimizer 111 determines for each of the plurality of clients 104 that may be connected to the base station 106 or to the core network 102 the multimedia rates that are available for the multimedia data, i.e. it is determined which of the multimedia formats (see Fig. 3) available at the server and listed in the MPD can be provided to the respective clients 104a and 104b given the network condition. This information, the determined multimedia format, is provided to the traffic engineering unit 112 and is used by the DASH proxy server 120.

For example, considering the situation that the DASH client 104a issues a request 114 including a specific video segment at a desired quality, this request 114 is forwarded via the base station 106 from the DASH client 104a to the traffic engineering unit 112 and is provided to the DASH-proxy server 120. The DASH-proxy server evaluates the request 114 and determines from the request the multimedia rate of the requested segment. In case it is determined that the desired multimedia rate does not correspond to the multimedia rate determined by the QoE optimizer 111 for the DASH client 104a, the DASH proxy server rewrites the request 114 by replacing the original multimedia rate by the determined multimedia rate and forwards the modified request 114' to the server 100. On the basis of the information included in the modified request, the server 100 provides the segment having the determined multimedia rate to the client, as is indicated at 116.

For example, considering the situation in Fig. 5 and assuming that in view of the channel information and the utility information the QoE optimizer 111 determined that the multimedia rate for client 104a is 1 Mbps (see Fig. 3) and the multimedia rate for client 104b is 0.5 Mbps (see Fig. 3), and further assuming that the DASH client 114 issues a request for a segment with a multimedia rate of 1.5 Mbps, embodiments of the invention operate as follows. At the DASH proxy server 114 the request for a segment with a multimedia rate of 1.5 Mbps is received and it is determined that this rate is different than the one associated by the QoE optimizer 111 to the client 104a (which was 1 Mbps). Therefore, the proxy server rewrites the client request to generate a modified request 114' so that the multimedia rate of the requested segment is now only 1 Mbps. Assuming that the request 114 included a request for segment 1 with a quality 1 (video rate 1.5 Mbps), in view of the modified request 114' the DASH server will forward to the client 104a segment 1 only with quality 2 (1 Mbps) over the path 116.

In case the multimedia rate indicated in request 114 is lower than the determined multimedia rate, the modified request 114' may include a multimedia rate that is higher than the original one.

In Fig. 5 a wireless environment is shown having two DASH clients, however, it is clear that the above described approach in accordance with embodiments of the invention also applies to environments having more than two clients. Also, it is noted that the approach is not limited to wireless networks, rather the approach may also be used in wired networks where video contents may be requested from a plurality of clients that are directly connected to the network (via a wired link) and the information provided to the QoE optimizer 111 may include information about the network condition, e.g., information about a possible path or a plurality of possible paths between the DASH server and the DASH client like the available total bandwidth for all DASH video streams on a path so that on the basis of these conditions, an optimal multimedia rate for each DASH client is determined and then used in the above described way by the proxy server 120.

When compared to conventional approaches, the embodiment of the invention described above with regard to Fig. 5 allows for a faster application layer rate (video quality) adaption and for a more direct control of video quality according to the network situation.

It is noted that the above described approach may be performed repeatedly, for example repeatedly during a transmission section, to take into account changes in the network condition so that the video rates provided by the QoE optimizer 111 to the proxy server 120 may be adapted or changed dependent on changing conditions in the network. For example, at the beginning of a session only a low video rate may be available for the DASH client 104, however, the channel between the client and the base station may improve and the overall available rate for the client may increase over the transmission session. As the available rate changes the video rate is increased so that the segments are provided to the client with increased quality.

Fig. 5 describes an embodiment in accordance with which the DASH-proxy server 120 is part of the traffic engineering unit 112, however, the invention is not limited to such embodiments. Rather, each of the DASH clients 104a, 104b may be provided with a unit implementing the functionality of a DASH proxy server 120 and in this case the video rates determined by the QoE optimizer 111 would be signaled from the QoE optimizer 111 to the respective DASH clients, so that in response to a client request the modified request can be readily generated at the client itself. In accordance with embodiments, the client implements an algorithm that allows him to recognize changes in the requests he sent out and which were done in the core network 102 by the proxy server 120. The DASH client takes these changes into account when determining the requested video format for future requests. In accordance with an embodiment, the algorithm implemented in the DASH client recognizes the video format received from the DASH server 100 and determines whether there is a difference between the requested format and the received format and on the basis of this information determines that a change occurred to it will use, for future requests, the new format signaled via the segment received from the server 100. In other embodiments, the proxy server may be configured to signal the changed video rate back to the requesting client.

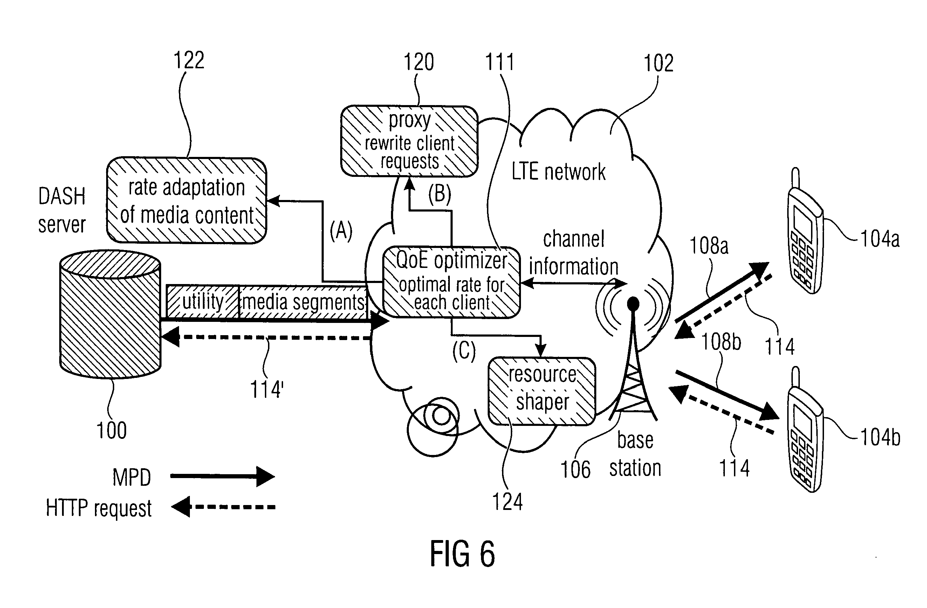

Fig. 6 shows a schematic representation describing further embodiments of the invention in the context of a wireless mobile network. Entities already described with regard to Fig. 5 have the same reference signs. In Fig. 6, an LTE core network 102 is schematically shown and includes the base station 106 for providing a wireless connection the DASH clients 104a and 104b. The DASH server 100 is connected to the LTE core network 102 which includes the QoE optimizer 111 described above with regard to Fig. 5 as well as the above described proxy server 120. In accordance with another embodiment of the present invention, the proxy server is not provided, rather the rates determined by the QoE optimizer 111 are provided to the DASH server which, on the basis of the received rate information for the respective clients and on the basis of the request 114 received via the core network 102, performs a rate adaption, as is indicated at block 122 for providing the video content in accordance with the adapted rate.

In the scenario depicted in Fig. 6, multiple mobile clients 104a, 104b simultaneously downstream different DASH content over the LTE core network 102. At the DASH server 100 the utility information of each content is determined and added to the media presentation description (MPD). The utility information can be signaled for example in the initialization segment of a representation or for every segment within a representation of the MPD and provides, in accordance with embodiments, rate-distortion information for the different formats or representations of the video contents stored in the DASH server 100 (see Fig. 3). In the mobile network the QoE optimizer 111 collects the MPD including the utility information and the channel information about the different DASH clients, and determines the optimal multimedia rates. In accordance with a first embodiment (see Fig. 5) a proactive network approach is used by providing the proxy server 120 which parses the client HTTP request 114 and modifies a multimedia or video rate from the MPD which matches the QoE optimization result. In accordance with the second embodiment described with regard to Fig. 6, the proactive server approach, the DASH server 100 proactively adapts the multimedia or video rate for a requesting client according to the feedback received from the QoE optimizer 111.

For both embodiments a bandwidth shaper 124 (see Fig. 6) may be provided so that on the basis of the determined multimedia rates the bandwidth for transmitting the multimedia data over the network to the requesting client can be limited and the necessary resources can be allocated.

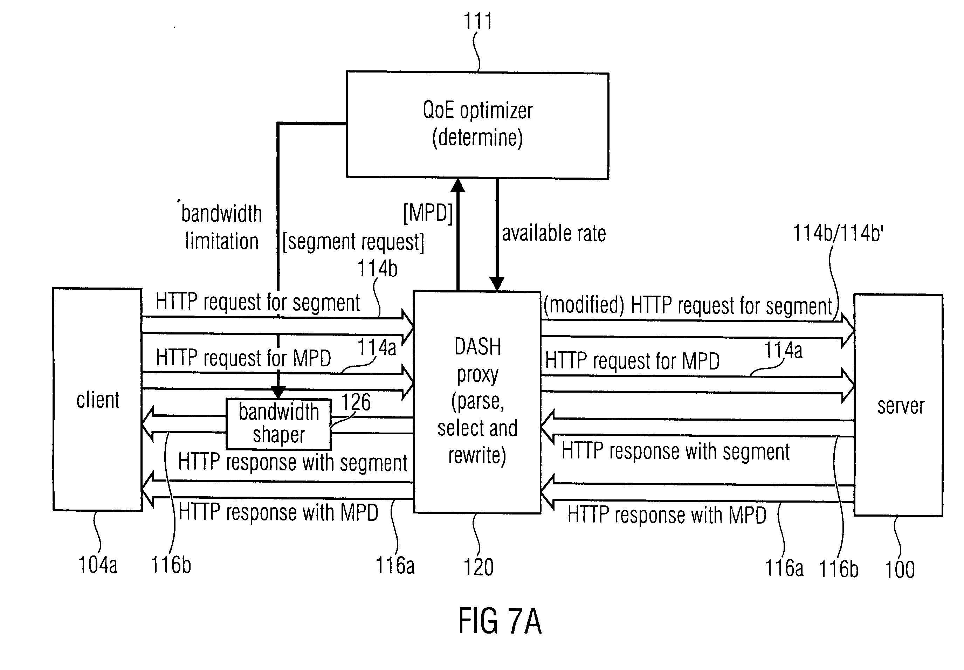

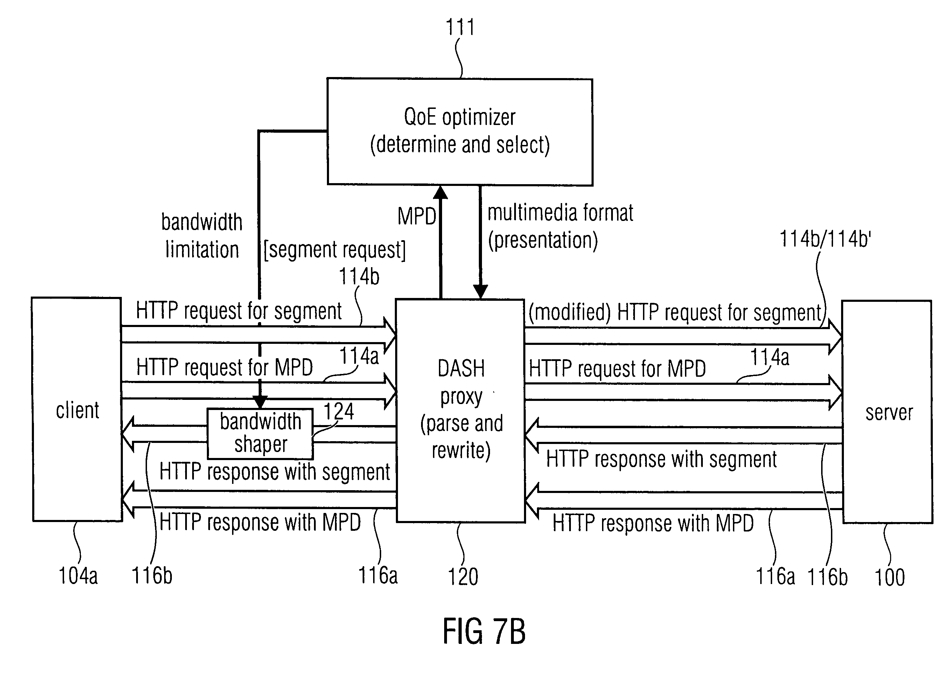

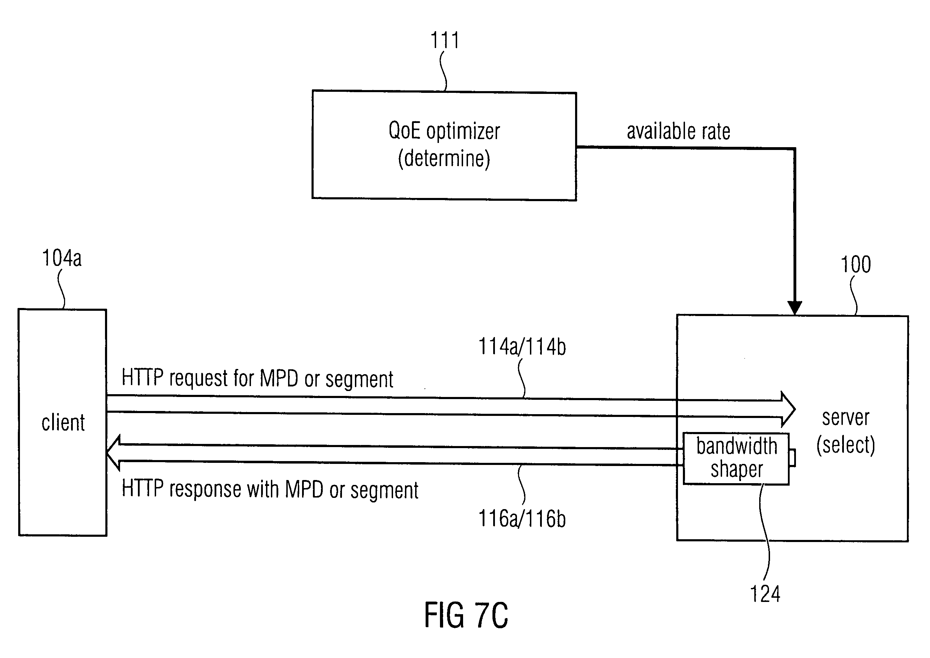

Fig. 7 shows schematic representations describing the approaches mentioned with regard to Fig. 6 in further detail, wherein Fig. 7(a) is a block diagram of the proactive proxy approach in accordance with an embodiment, Fig. 7(b) is a block diagram of the proactive proxy approach in accordance with another embodiment, and Fig. 7(c) is a block diagram of the proactive server approach in accordance with an embodiment. Entities already described with regard to Figs. 5 and 6 have the same reference signs.

Fig. 7(a) shows the DASH client 104a connected to the server 100 via the core network (not shown) which includes the proxy server 120 and the QoE optimizer 111 described above with regard to Fig. 5. At the beginning of the multimedia streaming process the DASH client 104a requests the media presentation description (MPD) of the desired multimedia stream from the server by sending an HTTP request 114a to the server 100. The request 114a includes the URL of the MPD. The server 100 returns to the client 104a, via the proxy server 120, an HTTP response 116a, which includes the requested MPD. The MPD may contain a description of the multimedia formats available at the server 100 including the URLs for the different segments and multimedia formats. The QoE optimizer 111 may receive from the proxy server 120 the MPD including the utility information. At the beginning and during the streaming the QoE optimizer regularly receives the information about the network condition from another network element (not shown), e.g. about the channel condition from the eNB in a mobile network. Based on this information, the utility information, and if present the available multimedia formats, the QoE optimizer regularly determines the available multimedia rate and provides it to the proxy server 120. The proxy server 120 learns about the available format by parsing the initial exchange of available formats between a server 100 storing the multimedia data and the client 104a. The QoE optimizer 111 may also provide information about possible bandwidth limitations to the resource shaper 124, a bandwidth shaper, to provide for a rate shaping mechanism upon transferring the data from the server 100 to the client 104a, as has been described above with regard to Fig. 4. During the streaming, for downloading a segment in the desired multimedia format, the DASH client 104a issues a request 114b to the server 100, wherein an HTTP request includes the URL of the multimedia segment stored on the server 100 in the desired quality. The proxy server 120 receives the request 114b from the client 104a and selects the format according to the latest information of available multimedia rates obtained from the optimizer. The proxy server 120 parses the request 114b and, when necessary, modifies the request based on the selected format, and transmits the modified request 114b' or the unmodified request 114b to the server 100. In response, the server 100 sends an HTTP response 116b via the proxy server 120 to the client 104a, which includes the requested segment.

Fig. 7(b) shows the DASH client 104a connected to the server 100 via the core network (not shown) which includes the proxy server 120 and the QoE optimizer 111 described above with regard to Fig. 5. Fig. 7(b) is an approach similar to the one described with regard to Fig. 7(a) except that in accordance with this embodiment the QoE optimizer 111 receives the above mentioned information, determines the available multimedia rates, selects the format, and provides the selected format to the proxy server 120. The proxy server 120 receives the request 114a, parses the request, modifies the request be rewriting it to indicate the selected format (received from the QoE optimizer 111), and transmits the modified request 114b to the server 100.

Fig. 7(c) shows the DASH client 104a connected directly to the server 100 via the core network (not shown) which includes the QoE optimizer 111 described above with regard to Fig. 5. At the beginning of the multimedia streaming process the DASH client 104a requests the media presentation description (MPD) of the desired multimedia stream from the server by sending an HTTP request 114a to the server 100. The request 114a includes the URL of the MPD. The server 100 returns to the client 104a an HTTP response 116a, which includes the requested MPD. The MPD may contain a description of the multimedia formats available at the server 100 including the URLs for the different segments and multimedia formats. The QoE optimizer 111 collects the utility information and the information about the network condition and determines the available multimedia rate that is provided to the server 100. The QoE optimizer 111 may also provide information about possible bandwidth limitations to the resource shaper 124, a bandwidth shaper, to provide for a rate shaping mechanism upon transferring the data from the server 100 to the client 104a, as has been described above with regard to Fig. 4. During the streaming, for downloading a segment in the desired multimedia format, the DASH client 104a issues a request 114b to the server 100, wherein an HTTP request includes the URL of the multimedia segment stored on the server 100 in the desired quality. In response, the server 100 sends an HTTP response 116b to the client 104a, which includes the requested segment, wherein the server 100 adapts the multimedia format for the client 104a and also limits the data transfer rate according to the feedback received from the QoE optimizer 111.

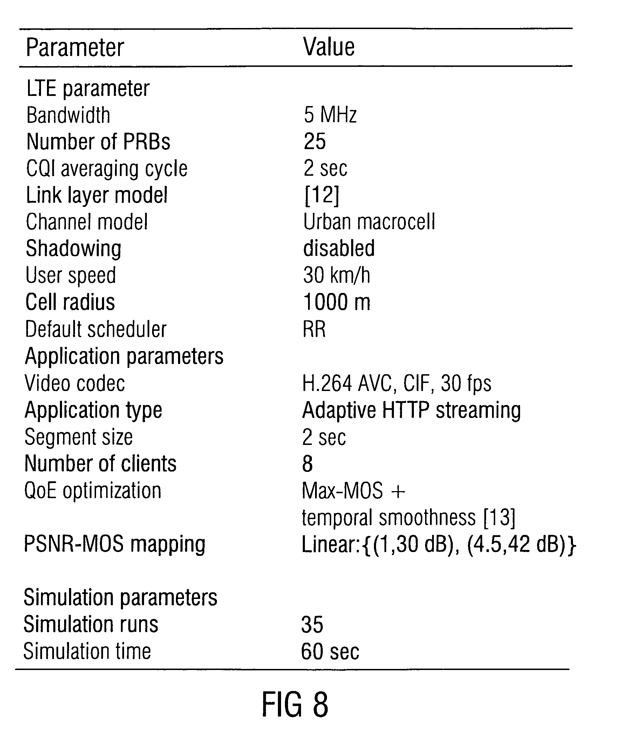

In the following, the approaches in accordance with embodiments of the invention will be compared to a purely reactive approach and to an approach not carrying out any adaption. More specifically, the proactive network approach (first embodiment shown in Fig. 5) and the proactive server approach (second embodiment shown in Fig. 6) and a reactive approach will be compared. In the reactive approach the client measures the available bandwidth that is allocated by the bandwidth shaper according to the result of the QoE optimization and uses the bandwidth measurements for determining and requesting the multimedia format with the appropriate rate. A comparison with the conventional DASH streaming approach will also be given where the streaming rate and the available resources are determined by the client and the LTE scheduler, respectively. The just mentioned four schemes will be compared for the downlink of an LTE system and eight clients requesting different DASH content encoded into eleven representations will be considered. The Microsoft smooth streaming client (see reference [4]) will be used in the simulations and Fig. 8 shows a table summarizing the simulation parameters.

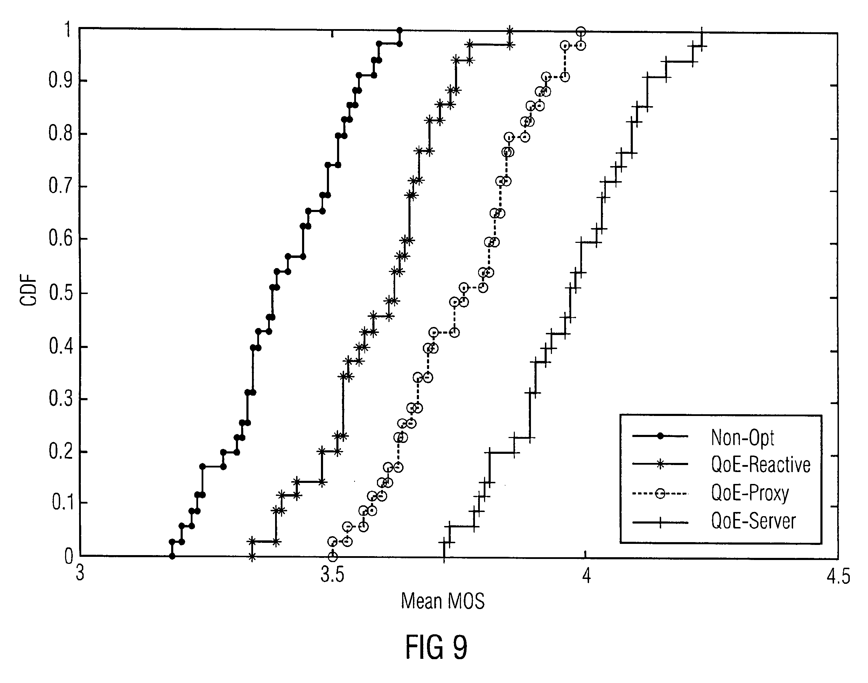

Fig. 9 shows a graph of the mean opinion score (MOS) of the different approaches averaged over 35 simulation runs. The MOS for all users is measured from 20 seconds to 60 seconds. The QoE-server approach (second embodiment) represents the optimal performance as all users are streaming at the optimal rates. The MOS for the QoE-proxy approach (first embodiment) will drop compared to the QoE-server approach as only a discrete set of bitrates is available. Both approaches correspond to the proactive optimization where the multimedia format and the corresponding transmission rate of each client are determined by the QoE optimizer 111. The reactive streaming improves the perceived video quality compared to the non-optimized DASH optimization (non-opt). The MOS for the reactive scheme, also drops compared to the proactive approaches as the client reacts late to throughput changes and does not always converge to the best representation level. For the QoE reactive and the non-opt schemes the multimedia format is only determined by the client. The QoE-reactive, QoE-proxy, and QoE-server schemes improve the average user satisfaction by 0.2, 0.36 and 0.57 on the MOS scale compared to the non-opt scheme, respectively.

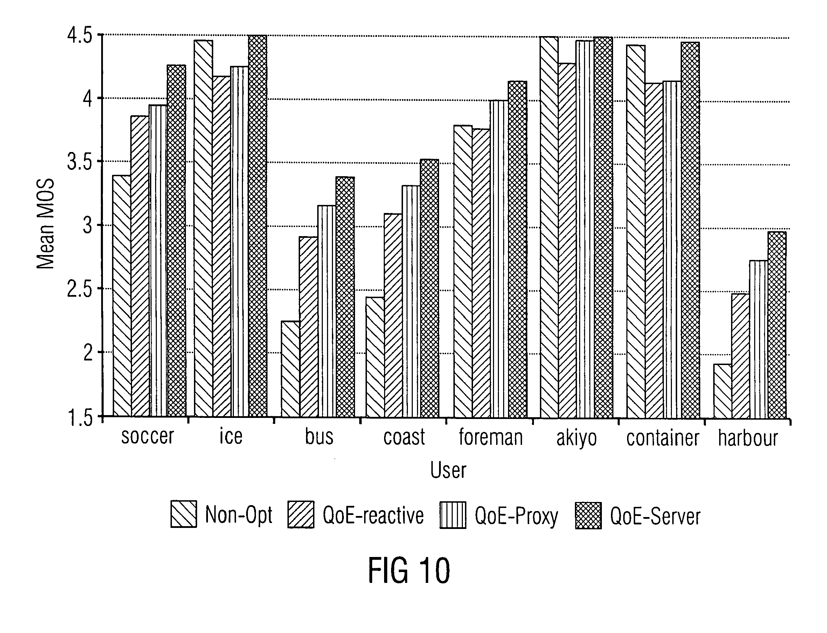

Fig. 10 shows the individual performance of the four schemes averaged over 35 simulations. It can be seen that the non-opt scheme provides good performance for less demanding users but fails for more demanding ones like bus, coast and harbor. Meanwhile, the QoE-based schemes allocate the resources among the users such that the overall user satisfaction is maximized. This results in substantial gains in perceived video quality for the demanding users while maintaining the MOS for the less demanding videos.

The above embodiments of the invention have been described in the context of wireless networks having clients requesting video contents. However, it is noted that the invention is equally applicable to wired environments, i.e. clients connected to a server via respective lines of a network. As mentioned above, the rates available for the respective clients are then determined from the specific conditions in the wired network. Also, the invention is not limited to video contents, rather it is applicable to all kinds of multimedia data to be transmitted from a server to a client, and multimedia data may include video data, image data, audio data and the like.

Further, it is noted that embodiments described above show the optimizer and the proxy server as separate entities of the network. In accordance with yet other embodiments, the optimizer and the proxy server may be implemented by a common entity, e.g. a common computer or sever implementing the functionality of both the optimizer and the proxy server.

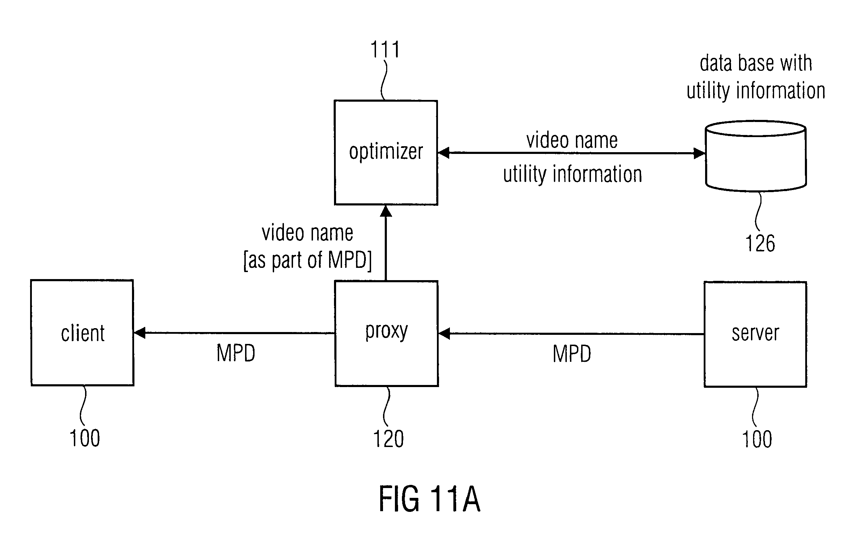

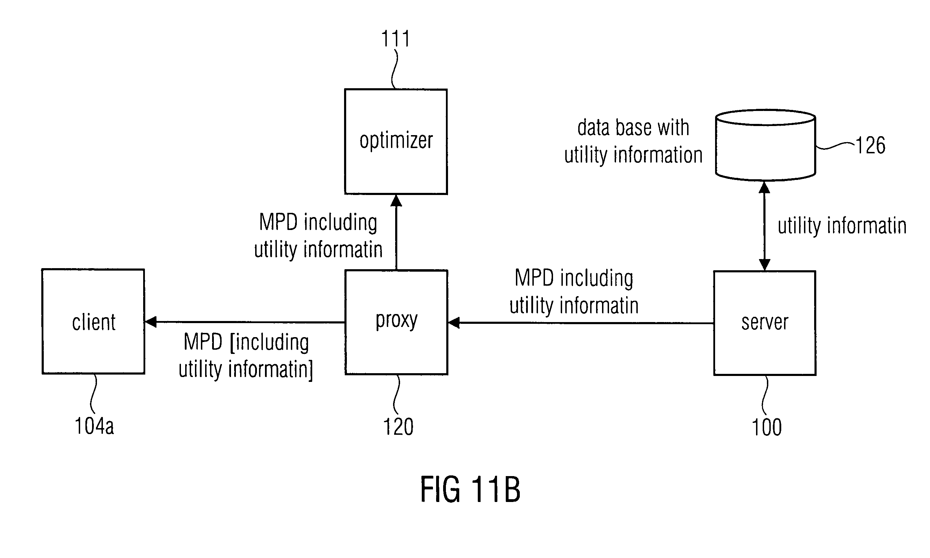

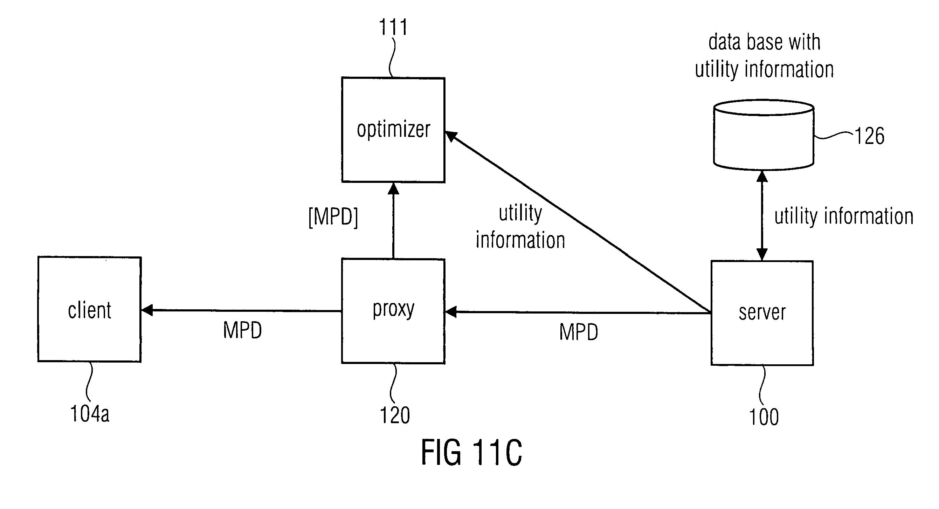

Fig. 11 shows embodiments for providing the utility information to the QoE optimizer. Fig. 11(a) shows an embodiment in accordance with which the utility information is obtained from a data base. Fig. 11(b) shows an embodiment in accordance with which the utility information is contained in the MPD. Fig. 11(c) shows an embodiment in accordance with which the utility information is obtained from the server.

Fig. 11(a) is a block diagram showing schematically the server 100, the client 104a, the proxy server 120 and the QoE optimizer 111. In addition, a data base 126 is shown holding the utility information. In accordance with this embodiment the client 104a requests the media presentation description (MPD) of the desired multimedia stream from the server by sending an HTTP request to the server containing the URL of the MPD. The server 100 returns the MPD which contains a description of the multimedia formats, e.g. a video name, available at the server including the URLs for the different segments and multimedia formats. The proxy server 120 receives the MPD, derives the video name and forwards it to the optimizer 111. The optimizer 111, on the basis of the received video name, queries the data base 126 and receives the utility information for the video requested by the client 104a.

In accordance with the embodiment of Fig. 11(b), the server, in response to the request from the client 104a, may query the data base 126 and retrieve the utility information for the requested MPD. The server 100 modifies the MPD to include the utility information. The modified MPD is then send to the client 100 and the QoE optimizer 111 via the proxy server 120.

In accordance with the embodiment of Fig. 11(c), the server 100, in response to the request from the client 104a, may query the data base 126 and retrieve the utility information for the requested MPD. The server 100 forwards the utility information directly to the optimizer. In all embodiments described above, the utility information may be stored in the data base 126 and accessed by the name or URL of the multimedia content as present in the MPD.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### Bibliography

[1] T. Stockhammer. Dynamic adaptive streaming over http - standards and design principles. Proc. MMSys 2011, San Jose, California, USA, Feb. 2011.
[2] K. Ma, R. Bartos, S. Bhatia, and R. Nair. Mobile video delivery with http. IEEE Communications Magazine, 49(4), 166:175, April 2011.
[3] S. Thakolsri, S. Khan, E. Steinbach, and W. Kellerer. QoE-driven cross-layer optimization for high speed downlink packet access. Journal of Communications, 4(9), 669:680, Oct. 2009.
[4] S. Akhshabi, A. C. Begen, and C. Dovrolis. An experimental evaluation of rate-adaptation algorithms in adaptive streaming over http. Proc. MMSys 2011, San Jose, California, USA, Feb. 2011.
[5] B. Wang, J. Kurose, P. Shenoy, and D. Towsley. Multimedia streaming via TCP: An analytic performance study. ACM Trans. Multimedia Comput. Commun. Appl., May 2008.
[6] L. D. Cicco, S. Mascolo, and V. Palmisano. Feedback control for adaptive live video streaming. Proc. MMsys 2011, San Jose, California, USA, Feb. 2011.
[7] D. Havey, R. Chertov, and K. Almeroth. Receiver driven rate adaptation for wireless multimedia applications. Proc. MMSys 2012, Chapel Hill, North Carolina, USA, Feb. 2012.
[8] A. Begen, T. Akgul, and M. Baugher. Watching video over the web: Part 2: Applications, standardization, and open issues. IEEE Internet Computing, 15(3), 59:63, May-June 2011.
[9] W. Pu, Z. Zou, and C. W. Chen. New TCP video streaming proxy design for last-hop wireless networks. Proc. IEEE ICIP 2011, Brussels, Belgium, Sept. 2011.
[10] K. Ma and R. Bartos. Http live streaming bandwidth management using intelligent segment selection. Proc. IEEE Globecom 2011, Texas, USA, Dec. 2011.
[11] R. HOUDAILLE and S. GOUACHE. Shaping http adaptive streams for a better user experience. Proc. MMSys 2012, Chapel Hill, North Carolina, USA, Feb. 2012.
[12] 3GPP TR 36.942. Evolved Universal Terrestrial Radio Access (E-UTRA); Radio Frequency (RF) system scenarios. Jan. 2011.
[13] S. Thakolsri, W. Kellerer, and E. Steinbach. QoE-Based Cross-Layer Optimization of Wireless Video with Unperceivable Temporal Video Quality Fluctuation. IEEE International Conference on Communications (ICC), June 2011.

## Claims

1. A method for transmitting multimedia data to a plurality of clients (104a, 104b) over a network (102), wherein the multimedia data is stored in a plurality of formats of different multimedia rates, the method comprising:
on the basis of utility information for the multimedia data, the utility information describing a relationship between multimedia quality and multimedia rate, and on the basis of a condition of the network (102), determining for each of the plurality of clients (104a, 104b) available multimedia rates for the multimedia data; and
in response to a client request (114) for transmitting the multimedia data with a desired multimedia rate, selecting, in accordance with the available multimedia rates determined for the requesting client (104a, 104b), a format of the requested multimedia data and transmitting the multimedia data in the selected format to the requesting client (104a, 104b).

2. The method of claim 1, wherein the method further comprises determining from the request (114) the desired multimedia rate, and wherein the step of selecting and transmitting comprises selecting from the plurality of different multimedia rates, in which the requested multimedia data is stored, the one that matches one of the available multimedia rates best.

3. The method of claim 2, wherein an optimizer and a proxy server (120) are provided,
wherein the optimizer receives the utility information and the information about the network condition, determines the available multimedia rates, and provides the available multimedia rates to the proxy server (120), and the proxy server (120) receives the request (114), selects the format, parses the request (114), modifies the request (114) based on the selected format, and transmits the modified request (114') to a server storing the multimedia data, or
wherein the optimizer receives the utility information and the information about the network condition, determines the available multimedia rates, selects the format, and provides the selected format to the proxy server (120), and the proxy server (120) receives the request (114)parses the request (114), modifies the request (114) based on the received selected format, and transmits the modified request (114') to the server storing the multimedia data.

4. The method of claim 3, wherein the request (114) for transmitting the multimedia data comprises a locator, e.g. a URL, the locator being associated with the multimedia data encoded at the desired multimedia rate, and wherein modifying the request (114) comprises changing the locator to match a locator associated with the multimedia data encoded at one of the available multimedia rates.

5. The method of claim 3 or 4, wherein the proxy server (120) is provided on the network (102) or on some or all of the clients (104a, 104b), wherein, in case the proxy server is provided on the one or more clients (104a, 104b), the available multimedia rates are signaled to the proxy server on the client (104a, 104b).

6. The method of claim 1, wherein the request (114) and the available multimedia rates are transmitted to a source (100) of the multimedia data, and wherein the source (100) selects the format of the multimedia data in accordance with one of the received available multimedia rates and transmits the requested multimedia data in the selected format.

7. The method of one of claims 1 to 6, further comprising allocating, on the basis of the selected multimedia rates, a bandwidth for transmitting the requested multimedia data over the network (102) to the requesting client (104a, 104b).

8. The method of one of claims 1 to 7, wherein the available multimedia rates are determined repeatedly during a transmitting session so as to take into account changes in the condition of the network (102), and wherein the multimedia data comprise a plurality of segments, each segment containing a certain period of the media data, and wherein the request (114) identifies the segment to be transmitted to the client (104a, 104b).

9. The method of one of claims 1 to 8, wherein the network (102) is a wired network or a wireless network, and wherein the network condition comprises a congestion status of the network (102) or radio conditions in the network (102).

10. The method of one of claims 1 to 9, wherein the multimedia data is provided in accordance with the DASH protocol and transmitted to the clients (104a, 104b) in accordance with HTTP, wherein, during a transmitting session, a client (104a, 104b) selects different desired multimedia rates according to predefined criteria, wherein, during a transmitting session, a client (104a, 104b) selects different desired multimedia rates according to predefined criteria.

11. The method of one of claims 1 to 10, wherein a client (104a, 104b) recognizes a change in the request (114) and takes the change into account when determining a desired multimedia rate for a future request (114).

12. A non-transitory computer program product comprising instructions stored on a machine-readable medium for performing the method of one of claims 1 to 11, when the instructions are executed on a computer.

13. A system for transmitting multimedia data to a plurality of clients (104a, 104b) over a network (102), wherein the multimedia data is stored in a plurality of formats of different multimedia rates, the system being configured to operate in accordance with a method of one of claims 1 to 11.

14. A network (102) for transmitting multimedia data to a plurality of clients (104a, 104b), wherein the multimedia data is stored in a plurality of formats of different multimedia rates, the network (102) comprising:
an optimizer configured to determine for each of the plurality of clients (104a, 104b) available multimedia rates for the multimedia data, on the basis of utility information for the multimedia data, the utility information describing a relationship between multimedia quality and multimedia rate, and on the basis of a condition of the network (102); and
a proxy server (120) configured to receive a client (104a, 104b) request (114) for transmitting the multimedia data with a desired multimedia rate and the available multimedia rates from the optimizer, to select from the plurality of different multimedia rates, in which the requested multimedia data is stored, the one that matches one of the available multimedia rates best, to modify the request (114) based on the selected one of the available multimedia rates, and to transmit the modified request (114') to a server (100) storing the multimedia data for causing the server (100) to transmit the multimedia data in the selected format to the requesting client (104a, 104b).

15. The network (102) of claim 14, further comprising a rate shaper configured to limit the bandwidth with which a multimedia data segment is transmitted from the server (100) to the client (104a, 104b) to a bandwidth signaled by the optimizer.

## Amended claims

### Amended claims in accordance with Rule 137(2) EPC.

**1.** A method for transmitting multimedia data from a source (100) of the multimedia data to a plurality of clients (104a, 104b) over a network (102), wherein the multimedia data is stored in a plurality of formats of different multimedia rates, the method comprising:
on the basis of utility information for the multimedia data, the utility information describing a relationship between multimedia quality and multimedia rate, and on the basis of a condition of the network (102), determining, by an optimizer (111) provided in the network (102) and receiving the utility information and the information about the network condition, for each of the plurality of clients (104a, 104b) connected to a base station (106) or to the network (102) available multimedia rates for the multimedia data, the available multimedia rates indicating which of multimedia formats available at the source (100) of the multimedia data and listed in the utility information can be provided to the respective clients (104a, 104b) given the network condition; and
in response to a client request (114) for transmitting the multimedia data with a desired multimedia rate, selecting, in accordance with the available multimedia rates determined by the optimizer (111) for the requesting client (104a, 104b), a format of the requested multimedia data and transmitting the multimedia data in the selected format to the requesting client (104a, 104b).

**2.** The method of claim 1, wherein the method further comprises determining from the request (114) the desired multimedia rate, and wherein the step of selecting and transmitting comprises selecting from the plurality of different multimedia rates, in which the requested multimedia data is stored, the one that matches one of the available multimedia rates best.

**3.** The method of claim 2, wherein the network (102) comprises a proxy server (120),
wherein the optimizer (111) provides the available multimedia rates to the proxy server (120), and the proxy server (120) receives the request (114), selects the format, parses the request (114), modifies the request (114) based on the selected format, and transmits the modified request (114') to source (100) of the multimedia data, or
wherein the optimizer (111) further selects the format, and provides the selected format to the proxy server (120), and the proxy server (120) receives the request (114)parses the request (114), modifies the request (114) based on the received selected format, and transmits the modified request (114') to the source (100) of the multimedia data.

**4.** The method of claim 3, wherein the request (114) for transmitting the multimedia data comprises a locator, e.g. a URL, the locator being associated with the multimedia data encoded at the desired multimedia rate, and wherein modifying the request (114) comprises changing the locator to match a locator associated with the multimedia data encoded at one of the available multimedia rates.

**5.** The method of claim 3 or 4, wherein the proxy server (120) is provided on the network (102) or on some or all of the clients (104a, 104b), wherein, in case the proxy server is provided on the one or more clients (104a, 104b), the available multimedia rates are signaled to the proxy server on the client (104a, 104b).

**6.** The method of claim 1, wherein the request (114) and the available multimedia rates are transmitted to the source (100) of the multimedia data, and wherein the source (100) selects the format of the multimedia data in accordance with one of the received available multimedia rates and transmits the requested multimedia data in the selected format.

**7.** The method of one of claims 1 to 6, further comprising allocating, on the basis of the selected multimedia rates, a bandwidth for transmitting the requested multimedia data over the network (102) to the requesting client (104a, 104b).

**8.** The method of one of claims 1 to 7, wherein the available multimedia rates are determined repeatedly during a transmitting session so as to take into account changes in the condition of the network (102), and wherein the multimedia data comprise a plurality of segments, each segment containing a certain period of the media data, and wherein the request (114) identifies the segment to be transmitted to the client (104a, 104b).

**9.** The method of one of claims 1 to 8, wherein the network (102) is a wired network or a wireless network, and wherein the network condition comprises a congestion status of the network (102) or radio conditions in the network (102).

**10.** The method of one of claims 1 to 9, wherein the multimedia data is provided in accordance with the DASH protocol and transmitted to the clients (104a, 104b) in accordance with HTTP, wherein, during a transmitting session, a client (104a, 104b) selects different desired multimedia rates according to predefined criteria, wherein, during a transmitting session, a client (104a, 104b) selects different desired multimedia rates according to predefined criteria.

**11.** The method of one of claims 1 to 10, wherein a client (104a, 104b) recognizes a change in the request (114) and takes the change into account when determining a desired multimedia rate for a future request (114).

**12.** A non-transitory computer program product comprising instructions stored on a machine-readable medium for performing the method of one of claims 1 to 11, when the instructions are executed on a computer.

**13.** A system for transmitting multimedia data to a plurality of clients (104a, 104b) over a network (102), wherein the multimedia data is stored in a plurality of formats of different multimedia rates, the system being configured to operate in accordance with a method of one of claims 1 to 11.

**14.** A network (102) for transmitting multimedia data to a plurality of clients (104a, 104b), wherein the multimedia data is stored in a plurality of formats of different multimedia rates, the network (102) comprising:
an optimizer configured to determine for each of the plurality of clients (104a, 104b) available multimedia rates for the multimedia data, on the basis of utility information for the multimedia data, the utility information describing a relationship between multimedia quality and multimedia rate, and on the basis of a condition of the network (102); and
a proxy server (120) configured to receive a client (104a, 104b) request (114) for transmitting the multimedia data with a desired multimedia rate and the available multimedia rates from the optimizer, to select from the plurality of different multimedia rates, in which the requested multimedia data is stored, the one that matches one of the available multimedia rates best, to modify the request (114) based on the selected one of the available multimedia rates, and to transmit the modified request (114') to a server (100) storing the multimedia data for causing the server (100) to transmit the multimedia data in the selected format to the requesting client (104a, 104b).

**15.** The network (102) of claim 14, further comprising a rate shaper configured to limit the bandwidth with which a multimedia data segment is transmitted from the server (100) to the client (104a, 104b) to a bandwidth signaled by the optimizer.
